Europäisches Patentamt

European Patent Office

Office européen des brevets

(11) Numéro de publication : **0 380 404 B1**

(12) **FASCICULE DE BREVET EUROPEEN**

(45) Date de publication du fascicule du brevet :
**22.12.93 Bulletin 93/51**

(51) Int. Cl.$^5$ : **H02P 5/165**

(21) Numéro de dépôt : **90400180.7**

(22) Date de dépôt : **23.01.90**

(54) **Procédé et circuit d'asservissement de la vitesse d'un moteur à courant continu à la tension de commande du moteur.**

(30) Priorité : **27.01.89 FR 8901008**

(43) Date de publication de la demande :
**01.08.90 Bulletin 90/31**

(45) Mention de la délivrance du brevet :
**22.12.93 Bulletin 93/51**

(84) Etats contractants désignés :
**DE GB IT NL**

(56) Documents cités :
**EP-A- 0 228 535**
**CA-A- 1 010 116**
**DD-A- 251 618**
**DE-A- 3 328 250**
**US-A- 3 705 337**

(73) Titulaire : **THOMSON-CSF**
**51, Esplanade du Général de Gaulle**
**F-92800 Puteaux (FR)**

(72) Inventeur : **Tabourier, Rémy**
**THOMSON-CSF SCPI Cédex 67**
**F-92045 Paris la Défense (FR)**

(74) Mandataire : **Benoit, Monique et al**
**THOMSON-CSF SCPI B.P. 329 50, rue**
**Jean-Pierre Timbaud**
**F-92402 Courbevoie Cédex (FR)**

EP 0 380 404 B1

Jouve, 18, rue Saint-Denis, 75001 PARIS

## Description

L'invention concerne un procédé et circuit d'asservissement de la vitesse d'un moteur à courant continu à la tension de commande du moteur.

Dans une technique classique pour assurer cet asservissement, on utilise une génératrice tachymétrique dont on exploite la contre-réaction, qui est une grandeur significative de la vitesse du moteur continu auquel elle est accouplée. Cette technique onéreuse et, dans certaines applications, inadaptée du fait de l'encombrement de la génératrice, a été remplacée par ta technique de commande d'un moteur dite "en contre-réaction motionnelle".

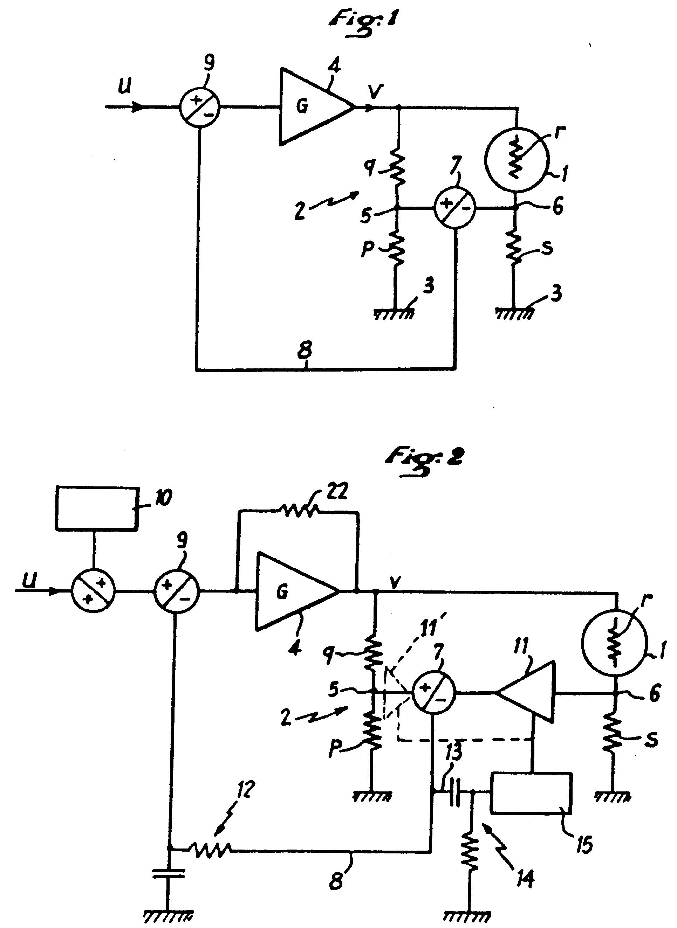

Cette seconde technique consiste à utiliser un montage en pont, comme celà est illustré par le schéma de la figure 1, permettant d'accéder à la force contre-électromotrice du moteur à courant continu lui-même. Sur cette figure, on a représenté le moteur 1 possédant une résistance d'induit r qui constitue l'une des quatre résistances r, s, p, q du pont 2 établi entre la masse 3 et la sortie d'un amplificateur de puissance 4 de gain G. Entre les bornes 5 et 6 de mesure du pont 2, on a disposé un sommateur 7 dont le signal de sortie (une tension) correspond à la différence entre les potentiels des deux bornes 5 et 6, le potentiel de la borne 6, appelé réaction d'intensité étant retranché de celui de la borne 5 appelé réaction de tension. Cette tension de sortie est conduite par une voie d'asservissement 8 à l'entrée de l'amplificateur 4 où, au moyen d'un sommateur 9, elle est retranchée de la tension de commande **U** admise également à l'entrée de l'amplificateur 4.

Le calcul montre qu'en choisissant correctement les valeurs des résistances s, p et q, pour un moteur donné de résistance d'induit connue et pour un amplificateur de gain donné, ce montage permet d'obtenir une vitesse proportionnelle à la seule tension **U** de commande du moteur dans un rapport où les effets du frottement sont notablement diminués. En outre, par cette disposition, la constante de temps électromécanique est également diminuée, ce qui est particulièrement intéressant dans le cas où une réponse rapide est souhaitée (amortissement d'un servo-mécanisme à boucle fermée).

Les limites de ce dispositif résident dans la variation de la résistance d'induit r en fonctionnement. A une température donnée, celle correspondant au réglage du moteur conformément à une spécification technique, on connaît le terme r et on peut assurer les conditions permettant une réponse du moteur, en vitesse, proportionnelle à la tension de commande U. Mais dans certaines applications, la plage des températures dans laquelle le moteur est amené à fonctionner est très large (supérieure parfois à 100°C), si bien que le terme r du pont 2 peut varier largement en dessous, au dessus ou autour de sa valeur nominale, conduisant à un non respect de la condition résultant du calcul pour obtenir la linéarité de la réponse en vitesse du moteur. Dans certains cas même, le calcul montre que cette variation peut conduire à une instabilité de l'asservissement et le moteur peut s'emballer. Pour éviter cette instabilité, on est contraint de choisir des valeurs de résistance du pont telles que les performances du système sont délibérément réduites pour assurer une sécurité suffisante aux températures extrêmes.

Il est connu, notamment par le brevet américain US-A-3,705,337 d'insensibiliser ce type d'asservissement de vitesse aux variations de la résistance d'induit du moteur avec la température en insérant dans l'une des branches du pont une thermistance couplée en température avec l'induit du moteur de manière à rattraper le déséquilibre du pont engendré par une variation de la résistance de l'induit, par une variation corrélative de la résistance d'une autre branche du pont.

L'invention a pour but une autre manière d'insensibiliser ce type d'asservissement de vitesse aux variations de la résistance d'induit du moteur qui ne nécessite pas de couplage thermique entre un élément correcteur et l'induit du moteur.

Elle a pour objet un procédé d'asservissement de la vitesse d'un moteur à courant continu à sa tension de commande, consistant à monter l'induit du moteur dans un circuit en pont et à injecter à l'entrée d'un circuit d'amplification de puissance d'alimentation du pont recevant la tension de commande, un signal d'asservissement correspondant à la différence de la réaction d'intensité et de la réaction de tension prélevées aux bornes du pont, selon lequel, en amont de l'amplificateur, on injecte une tension alternative de fréquence supérieure à la fréquence de coupure du moteur, qui engendre une composante alternative du signal d'asservissement susdit significative d'un déséquilibre du pont dû à la variation de la résistance d'induit, et on utilise cette composante alternative comme source d'un signal de commande du gain d'un amplificateur à gain réglable de la réaction d'intensité présente à l'une des bornes du pont ou de la réaction de tension présente à l'autre borne.

Le signal de commande du gain est constitué par un signal continu délivré en réponse à la détection de la partie de la composante alternative du signal d'asservissement qui est en phase avec le courant traversant l'induit du moteur.

L'invention a également pour objet un dispositif pour asservir la vitesse d'un moteur à courant continu conformément au procédé ci-dessus qui comporte un circuit en pont dans lequel l'induit du moteur forme une résistance, connecté à la sortie d'un circuit d'amplification de puissance, les bornes de mesure du pont étant connectées aux entrées d'un sommateur réalisant la différence entre la réaction de tension présente à l'une des bornes et la réaction de courant présente à l'autre borne, la sortie de ce sommateur étant connectée par une voie d'asservissement à l'une des entrées d'un second sommateur recevant sur son autre entrée la tension de commande et dont la sortie émet la différence entre cette tension de commande et le signal présent sur la voie d'asservissement en direction de l'entrée du circuit d'amplification.

Selon l'invention, ce dispositif comprend un générateur de fréquence connecté à l'entrée du circuit d'amplification de puissance, un amplificateur à gain réglable sur, soit la voie de mesure de la réaction de courant (de manière préférée), soit la voie de mesure de la réaction de tension, une dérivation de la voie d'asservissement pourvue d'un filtre passe haut et comprenant un dispositif de détection de la composante alternative du signal d'asservissement en phase avec le courant traversant l'induit du moteur, dont la sortie est connectée à la commande de gain de l'amplificateur à gain réglable. En outre, la voie d'asservissement comporte en amont du sommateur un filtre passe bas.

L'invention sera mieux comprise au cours de la description de modes de réalisation donnés ci-après à titre d'exemples purement indicatifs et non limitatifs qui permettront d'en dégager les avantages et les caractéristiques secondaires.

Il sera fait référence aux dessins annexés dans lesquels :
- la figure 1 est un schéma rappelant le dispositif connu de commande par contre-réaction motionnelle,
- la figure 2 illustre par un schéma un mode de réalisation de l'invention,
- la figure 3 est le schéma d'une variante de réalisation de la figure 2.

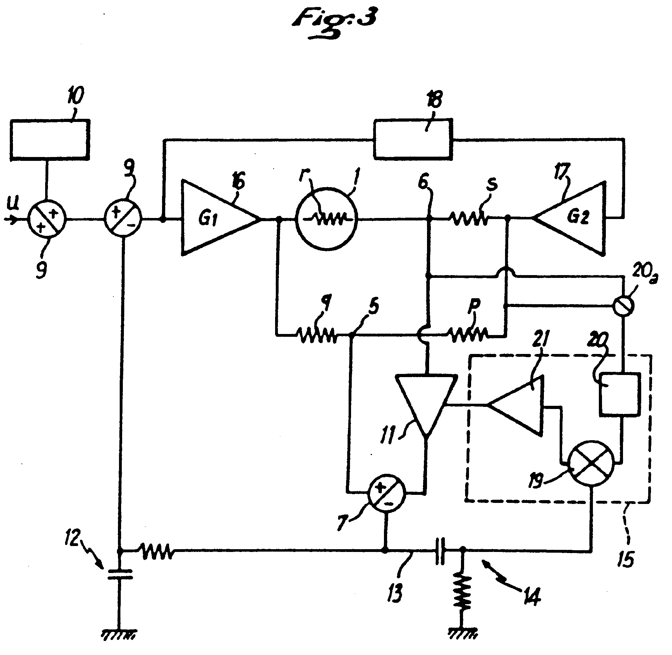

Sur la figure 2 on retrouve les éléments déjà décrits en regard de la figure 1 avec les mêmes références. A l'entrée de l'amplificateur 4, on injecte par un générateur 10 une tension alternative dont la fréquence est nettement supérieure à la fréquence de coupure de l'ensemble moteur 1 accouplé à sa charge. On rappelle que cette fréquence de coupure est celle au-delà de laquelle la vitesse du moteur n'est plus contrôlée. Entre la borne 6 et le sommateur 7, sur la voie de mesure de la réaction de courant du pont 2, on place un amplificateur 11 à gain réglable. La voie d'asservissement 8 possède un filtre passe-bas 12, ne laissant passer que les fréquences utiles du signal (tension) d'asservissement. Elle possède une dérivation 13 équipée d'un filtre passe-haut 14 connecté à l'entrée d'un dispositif 15 de détection de la composante alternative du signal d'asservissement issu du sommateur 7, et en phase avec le courant traversant l'induit du moteur 1. Cette composante est significative de la valeur de la résistance $\underline{r}$ de cet induit et permet au dispositif 15 de fournir un signal de commande du gain de l'amplificateur 11 en relation avec la variation de cette résistance.

Il est donc possible par ce moyen de corriger la valeur de la réaction de courant en fonction de la variation de $\underline{r}$ pour conserver au signal d'asservissement introduit à l'entrée de l'amplificateur 4 une valeur qui maintient la constance du rapport vitesse-moteur/tension U de commande, sur une plage de températures relativement importante.

Pour illustrer ce résultat, on donnera ci-après quelques éléments de calcul que le dispositif selon l'invention permet de satisfaire.

Dans le cas de la figure 1, on a :

$V = Ri + e$, où

V est la tension de sortie de l'amplificateur 4

R est égal à $\underline{r} + \underline{s}$,

$e$ est la force contre-électromotrice du moteur.

Au point 5 du pont 2, on a une réaction de tension égale à aV avec $a = \dfrac{p}{(p + q)}$.

Au point 6 du pont on a une réaction de courant égale à bRi, i étant l'intensité traversant l'induit du moteur et $b = \dfrac{s}{r + s}$.

Si G est le gain de l'amplificateur 4, on peut écrire que :

$[1/G + (a - b)] V = U - be = U - bkN$, où k est le coefficient de couple ou de vitesse du moteur et N la vitesse du moteur.

On voit donc que U sera proportionnel à N si a + 1/G = b.

Or, pour maintenir cette égalité, il faut pouvoir connaître b qui dépend de $\underline{r}$. Le dispositif 15 de commande du gain de l'amplificateur 11 permet cette connaissance et applique une correction au terme bRi afin de le maintenir constant malgré la variation de $\underline{r}$. La fonction de l'amplificateur 11 à gain commandé étant de rechercher l'équilibre du pont, du point de vue de la composante alternative du signal issu de 7, cet équilibre pourrait, d'une manière moins élégante, être obtenu en plaçant l'amplificateur 11 entre le point 5 et le sommateur 7 (indiqué en 11′ sur la figure 2).

Un exemple de réalisation du dispositif 15 est représenté à la figure 3, où le moteur est alimenté par un circuit d'amplification comportant deux amplificateurs 16, 17 (amplificateurs en H), de manière connue avec un inverseur de tension 18. On retrouve sur cette figure les éléments déjà décrits avec les mêmes références.

Le dispositif 15 comporte un démodulateur amplitude - phase 19 (connu en lui-même) qui reçoit la composante alternative du signal d'asservissement. Cette composante (tension) alternative est déphasée par rapport au courant du fait de l'auto-inductance de l'induit alimenté en courant alternatif. L'autre entrée du démodulateur 19 est alimentée par la sortie d'un limiteur 20 qui reçoit en entrée la réaction différentielle de courant issue d'un sommateur 20a placé aux bornes de la résistance $\underline{s}$ et délivre en sortie en direction du démodulateur 19 un signal carré de référence permettant à ce démodulateur de ne retenir que la composante ohmique pure de la chute de tension dans l'induit (en phase avec le courant) qui est significative de la valeur de r. C'est cette composante, amplifiée et éventuellement intégrée par un amplificateur (intégrateur) 21, qui constitue le signal de commande du gain de l'amplificateur 11 à gain réglable. On voit que, par ce dispositif, l'auto-inductance de l'induit est sans effet sur la mesure malgré une fréquence engendrée par la source 10 qui peut être élevée.

Enfin, on rappellera que les équations électromécaniques du moteur accouplé à sa charge, pour des frottements et une inertie donnés, imposent que b soit toujours inférieur à $a + \dfrac{1}{G}$, pour éviter l'instabilité de l'asservissement qui a été rappelée en préambule. Cette contrainte impose de ne pas rechercher l'égalité parfaite $a + \dfrac{1}{G} = b$. Pour être certain de ne pas enfreindre cette contrainte, on peut fausser la mesure par le dispositif 15 en introduisant une erreur de zéro au niveau de l'amplificateur 21, ou limiter le gain en tension G de l'amplificateur 4, soit par construction, soit en créant un second chemin 22 (figure 2) de réaction de tension, qui échappe à la régulation mais qui est parfaitement connu.

Le dispositif 15 tel qu'il est représenté en figure 2 peut être un simple dispositif de détection d'amplitude, donc sans référence au courant traversant le moteur, si la fréquence injectée par le générateur 10 est comprise entre la fréquence de coupure électrique du moteur et la fréquence de coupure de l'asservissement de vitesse et si ces trois fréquences sont nettement distinctes.

L'invention trouve des applications intéressantes dans tous les cas qui demandent une commande de vitesse et pour lesquels l'emploi d'une contre-réaction motionnelle est soit suffisante, soit la seule solution possible. L'invention permet d'en améliorer les performances parce qu'elle permet notamment d'améliorer la précision de la commande par diminution de l'influence du frottement, ou d'améliorer la bande passante par diminution de l'influence de l'inertie de la charge. Cette dernière amélioration est particulièrement utile pour l'amortissement des servo-mécanismes.

## Revendications

1. Procédé d'asservissement de la vitesse d'un moteur à courant continu à sa tension U de commande consistant à monter l'induit r du moteur dans un circuit en pont (2) et à injecter à l'entrée d'un circuit d'amplification (4, 16, 17) d'alimentation du pont (2), recevant la tension de commande (U) du moteur, un signal d'asservissement correspondant à la différence de la réaction d'intensité et de la réaction de tension prélevées aux bornes du pont (6,5), caractérisé en ce qu'en amont du circuit d'amplification on injecte une tension alternative de fréquence supérieure à la fréquence de coupure du moteur, qui engendre une composante alternative du signal d'asservissement susdit significative d'un déséquilibre du pont (2) dû à la variation de la résistance d'induit (r), et en ce qu'on utilise cette composante alternative comme source d'un signal de commande du gain d'un amplificateur (11) à gain réglable de la réaction d'intensité présente à l'une des bornes (6), ou de la réaction de tension présente à l'autre borne (5) du pont.

2. Procédé selon la revendication 1, caractérisé en ce que le signal de commande du gain de l'amplificateur (11) à gain réglable est constitué par la partie de la composante alternative du signal d'asservissement qui est en phase avec le courant traversant le moteur (1).

3. Dispositif pour asservir la vitesse d'un moteur (1) à courant continu conformément au procédé selon les revendications 1 et 2, comportant un circuit en pont (2), dans lequel l'induit du moteur (1) forme une résistance (r), connecté à la sortie d'un circuit d'amplification de puissance, les bornes (5, 6) de mesure du pont étant connectées aux entrées d'un sommateur (7) réalisant la différence entre la réaction de tension présente à l'une des bornes (5) et la réaction de courant présente à l'autre borne (6), la sortie de ce sommateur (7) étant connectée par une voie d'asservissement (8) à l'une des entrées d'un second sommateur (9) dont l'autre entrée reçoit la tension de commande (U) et qui émet en sortie en direction du circuit d'amplification la différence entre la tension (U) et le signal présent sur la ligne (8) d'asservissement, caractérisé en ce qu'il comprend un générateur (10) de fréquence connecté à l'entrée du circuit d'amplification (4, 16, 17) de puissance, un amplificateur (11) à gain réglable sur l'une des voies de mesure (6, 7 ou 5, 7) du pont une dérivation (13) de la voie d'asservissement (8) pourvue d'un filtre passe-haut (14) et aboutissant à l'entrée d'un dispositif de mesure (15) de la composante alternative du signal d'asservissement en phase avec le courant traversant l'induit du moteur (1), dont la sortie est connectée à la commande de gain de l'amplificateur (11) à gain réglable.

4. Dispositif selon la revendication 3, caractérisé en ce que la voie d'asservissement (8) comporte un filtre passe-bas (12).

**Patentansprüche**

1. Verfahren zum Regeln der Drehzahl eines Gleichstrommotors mittels seiner Steuerspannung U, das darin besteht, daß der Anker r des Motors in eine Brückenschaltung (2) geschaltet wird und daß in den Eingang einer Verstärkerschaltung (4, 16, 17) für die Versorgung der Brücke (2), die die Steuerspannung (U) des Motors empfängt, ein Regelungssignal eingegeben wird, das der Differenz zwischen der Stromrückwirkung und der Spannungsrückwirkung, die an den Anschlüssen der Brücke (6, 5) abgegriffen werden, entspricht, dadurch gekennzeichnet, daß stromaufseitig zur Verstärkerschaltung eine Wechselspannung mit einer Frequenz eingegeben wird, die höher als die Grenzfrequenz des Motors ist, wodurch eine Wechselspannungskomponente des obengenannten Regelungssignals erzeugt wird, die ein Ungleichgewicht der Brücke (2) aufgrund der Schwankung des Widerstandes des Ankers (r) anzeigt, und daß diese Wechselspannungskomponente als Quelle für ein Signal verwendet wird, mit dem die Verstärkung eines Verstärkers (11) mit einstellbarer Verstärkung für die an einem der Anschlüsse (6) vorhandene Stromrückwirkung oder für die am anderen Anschluß (5) der Brücke vorhandene Spannungsrückwirkung gesteuert wird.

2. Verfahren gemäß Anspruch 1, dadurch gekennzeichnet, daß das Signal für die Steuerung der Verstärkung des Verstärkers (11) mit einstellbarer Verstärkung durch denjenigen Teil der Wechselspannungskomponente des Regelungssignals gebildet ist, der mit dem den Motor (1) durchfließenden Strom in Phase ist.

3. Einrichtung zum Regeln der Drehzahl eines Gleichstrommotors (1) in Übereinstimmung mit dem Verfahren gemäß den Ansprüchen 1 und 2, mit einer Brückenschaltung (2), in der der Anker des Motors (1) einen Widerstand (r) bildet und die mit dem Ausgang einer Leistungsverstärkerschaltung verbunden ist, wobei die Meßanschlüsse (5, 6) der Brücke mit den Eingängen eines Summierers (7) verbunden sind, der die Differenz zwischen der an einem der Anschlüsse (5) vorhandenen Spannungsrückwirkung und der am anderen Anschluß (6) vorhandenen Stromrückwirkung erzeugt, wobei der Ausgang dieses Summierers (7) über einen Regelungspfad (8) mit einem der Eingänge eines zweiten Summierers (9) verbunden ist, dessen anderer Eingang die Steuerspannung (U) empfängt und der an seinem Ausgang zur Verstärkerschaltung die Differenz zwischen der Spannung (U) und dem auf der Regelungsleitung (8) vorhandenen Signal aussendet, dadurch gekennzeichnet, daß sie versehen ist mit einem Frequenzgenerator (10), der mit dem Eingang der Leistungsverstärkerschaltung (4, 16, 17) verbunden ist, einem Verstärker (11) mit einstellbarer Verstärkung in einem der Meßpfade (6, 7 oder 5, 7) der Brücke, einem Nebenschluß (13) des Regelungspfades (8), der mit einem Hochpaßfilter (14) versehen ist und zum Eingang einer Einrichtung (15) zum Messen derjenigen Wechselspannungskomponente des Regelungssignals führt, die mit dem durch den Anker des Motors (1) fließenden Strom in Phase ist, wobei der Ausgang der Meßeinrichtung (15) mit der Verstärkungssteuerung des Verstärkers (11) mit einstellbarer Verstärkung verbunden ist.

4. Einrichtung gemäß Anspruch 3, dadurch gekennzeichnet, daß der Regelungspfad (8) ein Tiefpaßfilter (12) enthält.

**Claims**

1. Method of slaving the speed of a direct-current motor to its control voltage U consisting in mounting the armature r of the motor in a bridge circuit (2) and in injecting, at the input of an amplification circuit (4, 16, 17) for supplying the bridge (2) receiving the control voltage U of the motor, a slaving signal corresponding to the difference in the current strength reaction and in the voltage reaction picked up at the terminals of the bridge (6, 5), characterised in that, upstream from the amplification circuit an alternating voltage is injected at a frequency higher than the cutoff frequency of the motor, which generates an alternating component of the abovementioned slaving signal which is indicative of an imbalance in the bridge (2) due to the variation in the armature resistance (r), and in that this alternating component is used as the source of a signal for control of the gain of a variable-gain amplifier (11) for the current strength reaction present at one of the terminals (6), or of the voltage reaction present at the other terminal (5) of the bridge.

2. Method according to Claim 1, characterised in that the signal for control of the gain of the variable-gain amplifier (11) consists of that part of the alternating component of the slaving signal which is in phase with the current passing through the motor (1).

3. Device for slaving the speed of a direct-current motor (1) in accordance with the method according to Claims 1 and 2, including a bridge circuit (2), in which the armature of the motor (1) forms a resistor (r), connected to the output of a power amplification circuit, the measurement terminals (5, 6) of the bridge being connected to the inputs of a summer (7) forming the difference between the voltage reaction present at one of the terminals (5) and the current reaction present at the other terminal (6), the output of this summer (7) being connected via a slaving channel (8) to one of the inputs of a second summer (9) whose other input receives the control voltage (U) and which outputs to the amplification circuit the difference between the voltage (U) and the signal present on the slaving line (8), characterised in that it comprises a frequency generator (10) connected to the input of the power amplification circuit (4, 16, 17), a variable-gain amplifier (11) on one of the measurement channels (6, 7 or 5, 7) of the bridge, a take-off (13) from the slaving channel (8) provided with a high-pass filter (14) and ending up at the input of a device (15) for measuring the alternating component of the slaving signal in phase with the current passing through the armature of the motor (1), whose output is connected to the gain control of the variable-gain amplifier (11).

4. Device according to Claim 3, characterised in that the slaving channel (8) includes a low-pass filter (12).

Fig. 1

Fig. 2

## Fig:3